# EUROPEAN PATENT APPLICATION

(11) **EP 2 587 801 A1**
(43) Date of publication of application: **01.05.2013**
(21) Application number: 11797763.7
(22) Date of filing: 23.05.2011
(51) Int. Cl.: H04N 7/173

(54) **VIDEO REPRODUCTION SYSTEM**

(30) Priority: 23.06.2010 JP 2010142836
(71) Applicant: Mitsubishi Electric Corporation, Tokyo 100-8310 (JP)
(72) Inventor: HONDA, Hiroshi, Tokyo 100-8310 (JP)
(74) Representative: Pfenning, Meinig & Partner GbR
(86) International application number: PCT/JP2011/002861
(87) International publication number: WO 2011/161874

(57) **Abstract**

Disclosed is a video reproduction system including: a video receive terminal 6 for generating both first quality information for reproducing a degraded video which is played back by a user side from a video stream distributed thereto via an external network 3 and a home network 5, and quality control information based on the first quality information; a home gateway device 4 for generating second quality information for reproducing a virtual degraded video from which an influence of quality degradation caused by the home network 5 is removed on the basis of the quality control information; and a quality control system 8 for reproducing the degraded video which is played back by the user side by using both an original video stream which is yet to be distributed via the external network 3 and the first quality information while reproducing the virtual degraded video by using both the original video stream and the second quality information.

## Description

### FIELD OF THE INVENTION

The present invention relates to a system for reproducing a video in which degradation has occurred when the video is provided for a user in a service of carrying out video communications in real time.

### BACKBROUND OF THE INVENTION

In recent years, the spread of video communication services which are carried out in real time, such as video delivery through an IP network, has been progressing. However, because an IP network is of best effort type and does not provide guaranteed network transmission quality, a delay in transfer of packets and a loss of packets occur in an IP network. In addition, also in a video receive terminal, packet discarding caused by a buffer overflow or the like occurs. Therefore, in order to provide a video communication service in real time, a technique of carrying out monitoring and analysis of the quality of a video which each user is viewing, i.e., the end-user quality of experience is required.

As the technique of carrying out monitoring and analysis of video quality, patent reference 1 discloses a quality monitoring analyzing system connected to video receive terminals in a network and having a structure of receiving pieces of packet information collected from each video receive terminal, and acquiring objective evaluation data which are degradation factors, i.e., pieces of quality information including a transmission delay, a packet loss rate, fluctuation information, and the standard deviation value of jitters.

However, the objective monitoring and analysis based on only the collection of the pieces of quality information is not sufficient. Therefore, patent reference 2 discloses a technique of causing a management system to reproduce a video which has been degraded and which is played back by a user side. Concretely, the management system reproduces the status of video reproduction carried out by a user side by causing a reproduction device to receive timing information in which the sequence number and reception time of each packet received by a video receive terminal are recorded and transmit the same packet to the video receive terminal after a fixed time has elapsed since the reception time in the video receive terminal.

Further, as a related technique, patent reference 3 discloses a structure of reproducing a video which has been degraded and which is played back by a user side by feeding a frame loss in the video receive terminal back to a network terminal which is a transmit side and then making the fed-back packets become lost.

### Related art document

### Patent reference

Patent reference 1: Japanese Unexamined Patent Application Publication No. 2005-102019
Patent reference 2: Japanese Unexamined Patent Application Publication No. 2007-324707
Patent reference 3: Japanese Unexamined Patent Application Publication No. 2007-150916

### SUMMARY OF THE INVENTION

### PROBLEMS TO BE SOLVED BY THE INVENTION

However, the following problems arise in the conventional technologies disclosed by above-mentioned patent references 1 to 3. The first problem is that because only a video which is played back by a user side and which has been degraded is reproduced, in which section on the network the quality degradation has occurred cannot be analyzed. External network environments and home network environments have diversified in recent years, and it is urgently necessary for video communication service providers to determine where on the network a cause of the quality degradation exists.

The second problem is that a video which is a target for reproduction is limited to a video which a user is viewing actually, and a video which any user is not viewing cannot be reproduced. Because the end-user quality of experience of the video degrades due to the influence of distributed contents, the end-user quality of experience differs depending on the content which the user is viewing. Therefore, in order to analyze the end-user quality of experience in consideration of the influence of distributed contents, it is necessary to reproduce not only the video which the user is viewing but also any video that has been degraded.

The present invention is made in order to solve the above-mentioned problems, and it is therefore an object of the present invention to a video reproduction system that can determine a point where quality degradation has occurred in a video communication service, and that can analyze the end-user quality of experience more easily.

### MEANS FOR SOLVING THE PROBLEM

In accordance with the present invention, there is provided a video reproduction system that reproduces quality degradation occurring in a video communication service which is provided via an exterior network and a home network, and that is constructed in such a way as to include: a video receive terminal for generating both first quality information for reproducing a degraded video which is played back by a user side from a video stream distributed thereto via the external network and the home network, and quality control information based on the first quality information; a home gateway device for generating second quality information for reproducing a virtual degraded video from which an influence of quality degradation caused by the home network is removed on the basis of the quality control information; and a quality control system for reproducing the degraded video which is played back by the user side by using both an original video stream which is yet to be distributed via the external network and the first quality information while reproducing the virtual degraded video by using both the original video stream and the second quality information.

### ADVANTAGES OF THE INVENTION

Because the video reproduction system in accordance with the present invention is constructed in such a way as to include: the video receive terminal for generating both first quality information for reproducing a degraded video which is played back by a user side from a video stream distributed thereto via the external network and the home network, and quality control information based on the first quality information; the home gateway device for generating second quality information for reproducing a virtual degraded video from which an influence of quality degradation caused by the home network is removed on the basis of the quality control information; and the quality control system for reproducing the degraded video which is played back by the user side by using both an original video stream which is yet to be distributed via the external network and the first quality information while reproducing the virtual degraded video by using both the original video stream and the second quality information, the video reproduction system can determine a point on the network where quality degradation occurs in a video communication service and further enables a video communication service provider to analyze the end-user quality of experience easily.

### BRIEF DESCRIPTION OF THE FIGURES

[Fig. 1] Fig. 1 is a view showing the structure of a video reproduction system in accordance with Embodiment 1;
[Fig. 2] Fig. 2 is a view showing an example of a display produced by a video display terminal in accordance with Embodiment 1;
[Fig. 3] Fig. 3 is a sequence diagram showing a degraded video reproduction operation of the video reproduction system in accordance with Embodiment 1;
[Fig. 4] Fig. 4 is a block diagram showing the structure of the video receive terminal in accordance with Embodiment 1;
[Fig. 5] Fig. 5 is a view showing an example of first quality information which the video receive terminal in accordance with Embodiment 1 generates;
[Fig. 6] Fig. 6 is a flow chart showing a packet total number calculating process carried out by a first quality information generating unit of the video receive terminal in accordance with Embodiment 1;
[Fig. 7] Fig. 7 is a view showing an example of lost blocks and recovered blocks;
[Fig. 8] Fig. 8 is a flow chart showing the operation of a quality control information generating unit of the video receive terminal in accordance with Embodiment 1;
[Fig. 9] Fig. 9 is a view showing an example of quality control information which the video receive terminal in accordance with Embodiment 1 generates;
[Fig. 10] Fig. 10 is a block diagram showing the structure of a home gateway device in accordance with Embodiment 1; [Fig. 11] Fig. 11 is a flow chart showing the operation of a second quality information generating unit of the home gateway device in accordance with Embodiment 1;
[Fig. 12] Fig. 12 is a flow chart showing a packet discarding process with a delay carried out by the second quality information generating unit of the home gateway device in accordance with Embodiment 1;
[Fig. 13] Fig. 13 is a flow chart showing a recovery reflecting process with an FEC carried out by the second quality information generating unit of the home gateway device in accordance with Embodiment 1;
[Fig. 14] Fig. 14 is a view showing an example of a search for lost blocks which is made by the second quality information generating unit of the home gateway device in accordance with Embodiment 1;
[Fig. 15] Fig. 15 is a view showing an example of second quality information which the home gateway device in accordance with Embodiment 1 generates;
[Fig. 16] Fig. 16 is a block diagram showing the structure of a quality control system in accordance with Embodiment 1;
[Fig. 17] Fig. 17 is a flow chart showing the operation of a degraded video reproducing unit of the quality control system in accordance with Embodiment 1;
[Fig. 18] Fig. 18 is a view showing an example of a search for lost blocks which can be generated which is made by the quality control system in accordance with Embodiment 1;
[Fig. 19] Fig. 19 is a view showing the structure of a video reproduction system in accordance with Embodiment 2;
[Fig. 20] Fig. 20 is a block diagram showing the structure of a quality control system in accordance with Embodiment 2;
[Fig. 21] Fig. 21 is a view showing the structure of a video reproduction system in accordance with Embodiment 3; and
[Fig. 22] Fig. 22 is a view showing an example of first quality information which a video receive terminal in accordance with Embodiment 4 generates.

### EMBODIMENTS OF THE INVENTION

Hereafter, in order to explain this invention in greater detail, the preferred embodiments of the present invention will be described with reference to the accompanying drawings. Embodiment 1.

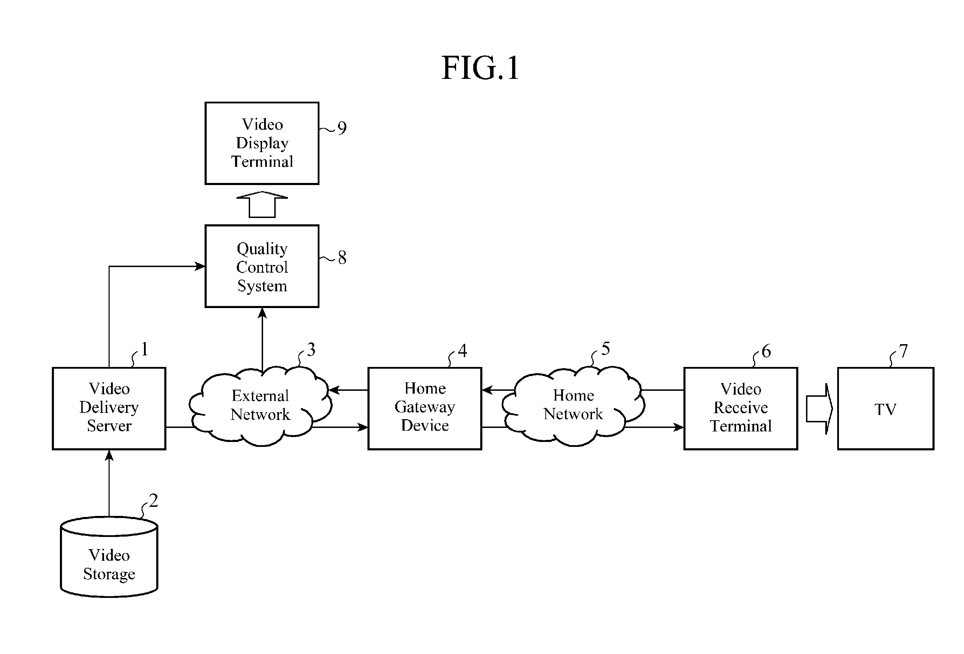

Fig. 1 is a block diagram showing the structure of a video reproduction system in accordance with Embodiment 1 of the present invention. This video reproduction system is comprised of a video delivery server 1, a video storage 2, an external network 3, a home gateway device 4, a home network 5, a video receive terminal 6, a TV 7, a quality control system 8, and a video display terminal 9. The home gateway device 4, the video receive terminal 6, and the TV 7 are arranged in a user's house. The video delivery server 1 distributes a video stream acquired from the video storage 2 to the home gateway device 4 via the external network 3. The video delivery server also outputs the original video stream stored in the video storage 2 to the quality control system 8. The video is RTP (Real-Time Transport Protocol) packetized into packets, and these packets are distributed by using UDP (User Datagram Protocol) as a transport protocol. Hereafter, packets, which are simply referred to, stand for RTP packets.

The home gateway device 4 is connected to the external network 3 by way of an optical fiber or a telephone line, and transfers packets between the external network 3 and the home network 5. The home gateway device 4 transfers a video stream to the video receive terminal 6, and monitors the video stream which the home gateway device transfers to the video receive terminal to generate second quality information. The generated second quality information is transmitted to the quality control system 8. The second quality information includes information for reproducing a virtual degraded video. The virtual degraded video is a degraded video from which an influence of quality degradation caused by the home network 5 is removed. For example, even when a network congestion occurs in the home network 5 and a video which is played back by the user side is degraded, the virtual degraded video is not degraded.

The video receive terminal 6 outputs a video distributed thereto from the home gateway device 4 to the TV 7. The video receive terminal 6 also generates first quality information from the video stream distributed thereto. This first quality information includes information for reproducing the degraded video which is outputted to the TV 7, i.e., which is played back by the user side. The generated first quality information is transmitted to the quality control system 8. The quality control system 8 reproduces the virtual degraded video by using both the second quality information received from the home gateway device 4, and the original video stream inputted thereto from the video delivery server 1. The quality control system also reproduces the degraded video played back by the user side by using both the first quality information received from the video receive terminal 6 and the original video stream distributed thereto from the video delivery server 1.

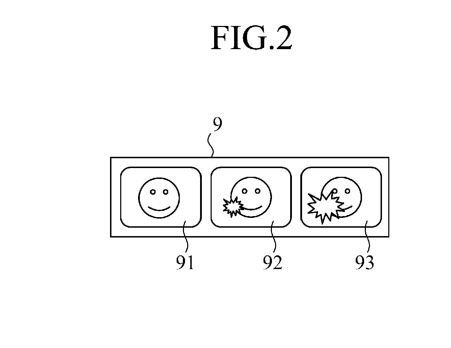

The video display terminal 9 is connected to the quality control system 8 via a video input/output interface (not shown), and displays the video outputted from the quality control system 8. A display example in the video display terminal 9 is shown in Fig. 2. The video display terminal 9 is comprised of an original video display unit 91 for displaying the original video, a virtual degraded video display unit 92 for displaying the virtual degraded video from which the influence of the quality degradation caused by the home network 5 is removed, and a user playback degraded video display unit 93 for displaying the degraded video played back on the TV 7 on the user side.

### [The operation of the video reproduction system]

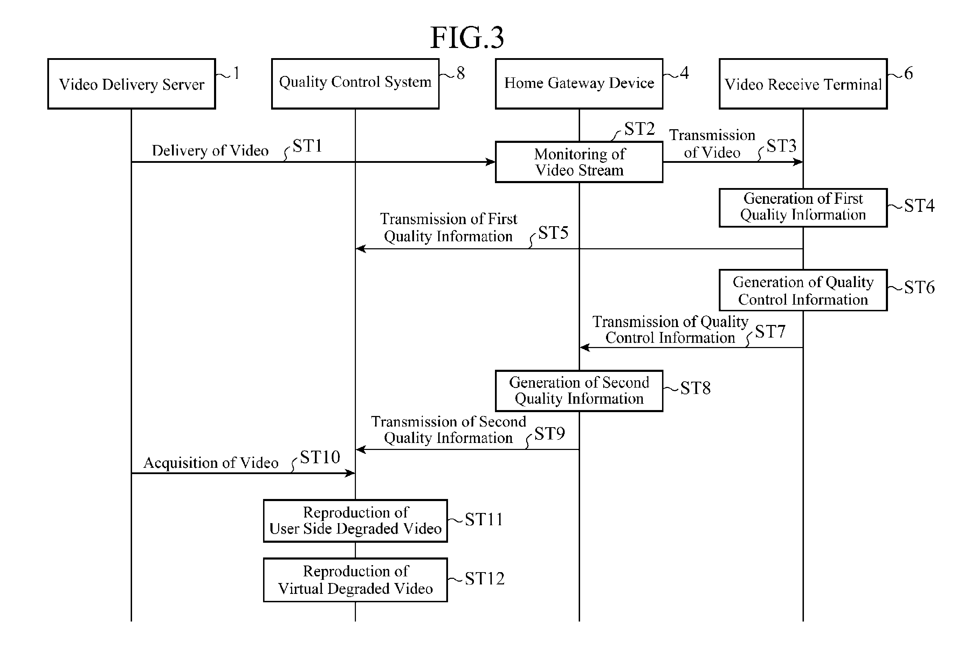

The operation of the video reproduction system in accordance with Embodiment 1 will be explained with reference to Fig. 3. Fig. 3 is a sequence diagram showing the degraded video reproducing operation of the video reproduction system in accordance with Embodiment 1. The video delivery server 1 acquires a video stream distributed thereto from the video storage 2, and distributes the video stream to the home gateway device 4 via the external network (step ST1). The home gateway device 4 monitors the video stream distributed thereto (step ST2), and transfers the video stream distributed thereto to the video receive terminal 6 (step ST3).

The video receive terminal 6 generates first quality information from the video stream distributed thereto (step ST4), and transmits the first quality information generated thereby to the quality control system 8 (step ST5). The video receive terminal 6 also generates quality control information by using both the video stream distributed thereto and the first quality information generated in step ST4 (step ST6), and transmits the quality control information generated thereby to the home gateway device 4 (step ST7). The quality control information includes information required for the home gateway device 4 to generate second quality information.

The home gateway device 4 generates second quality information by using both the quality control information received from the video receive terminal 6 and the video stream which the home gateway device monitors in step ST2 (step ST8). The second quality information generated in step ST8 is transmitted to the quality control system 8 (step ST9).

The quality control system 8 acquires the original video stream from the video delivery server 1 (step ST10), and reproduces the degraded video played back by the user side on the basis of both the original video stream and the first quality information transmitted thereto from the video receive terminal 6 in step ST5 (step ST11). The quality control system also reproduces the virtual degraded video on the basis of both the original video stream acquired in step ST10 and the second quality information transmitted thereto from the home gateway device 4 in step ST9 (step ST12). Hereinafter, the video reproduction system repeats the same processing.

### [The structure of the video receive terminal]

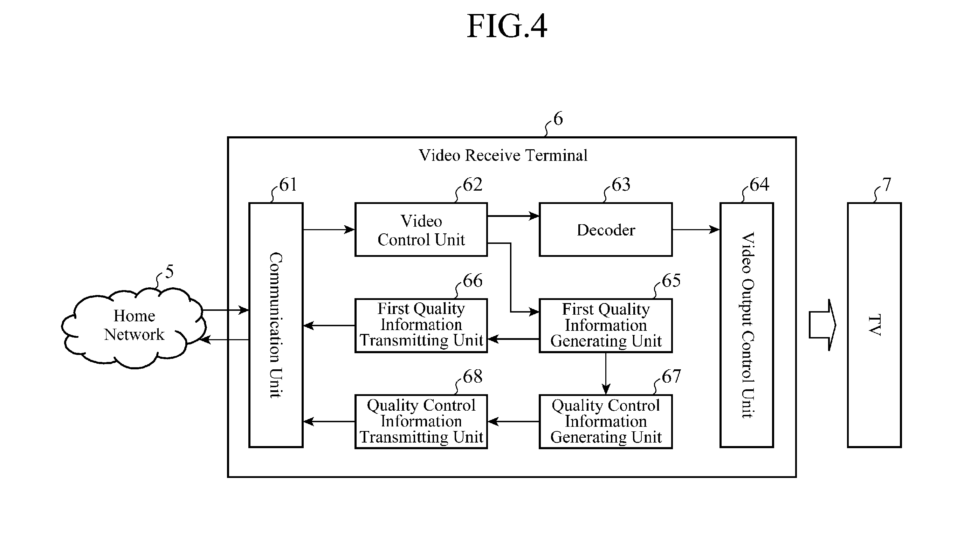

Next, the detailed structure of the video receive terminal 6 will be explained. Fig. 4 is a block diagram showing the structure of the video receive terminal in accordance with Embodiment 1. The video receive terminal 6 is comprised of a communication unit 61, a video control unit 62, a decoder 63, a video output control unit 64, a first quality information generating unit 65, a first quality information transmitting unit 66, a quality control information generating unit 67, and a quality control information transmitting unit 68. The communication unit 61 receives the video stream inputted thereto via the home network 5, and outputs the video stream to the video control unit 62. The communication unit 61 transmits the first quality information and the quality control information which are generated within the video receive terminal 6 to the home network 5.

The video control unit 62 recovers the lost packets of the video stream received thereby by making an FEC (Forward Error Correction) to the video stream, and outputs the packets recovered thereby to the decoder 63. The video control unit 62 also outputs the video stream yet to be recovered through the FEC and the video stream recovered through the FEC, and the time that each packet of the video stream reached the communication unit 61, the channel number of the video which the user is viewing, and the resolution of the video displayed on the TV to the first quality information generating unit 65. The decoder 63 decodes the video stream and outputs the video stream decoded thereby to the video output control unit 64. The video output control unit 64 outputs the video to the TV 7 via the video input/output interface (not shown).

The first quality information generating unit 65 generates the first quality information for each quality measurement section on the basis of the pieces of information inputted thereto from the video control unit 62. Each quality measurement section is a set of consecutive packets which are extracted from the video stream and whose number is calculated by the first quality information generating unit 65. The first quality information transmitting unit 66 receives the first quality information which the first quality information generating unit 65 generates, and transmits the first quality information to the quality control system 8 via the communication unit 61. The quality control information generating unit 67 receives the video stream yet to be recovered through the FEC and the video stream recovered through the FEC, and the first quality information from the first quality information generating unit 65, and generates the quality control information for each quality measurement section which the first quality information generating unit 65 determines. The quality control information transmitting unit 68 receives the quality control information which the quality control information generating unit 67 generates, and transmits the quality control information to the home gateway device 4 via the communication unit 61.

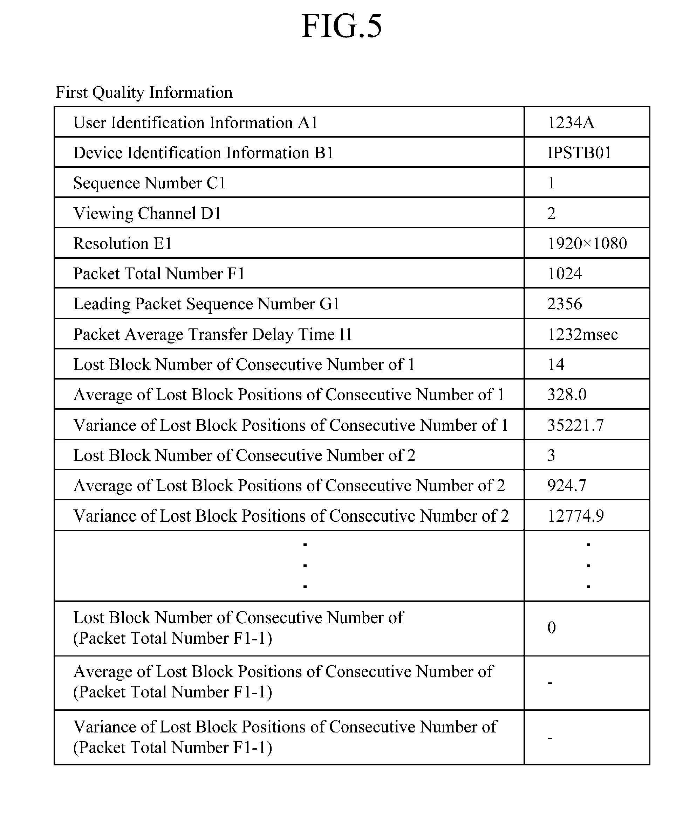

Fig. 5 is a view showing an example of the first quality information which the first quality information generating unit of the video receive terminal in accordance with Embodiment 1 generates. User identification information A1 shows an identifier which the quality control system 8 uses for user identification when reproducing the degraded video. The user identification information is added to the first quality information by the first quality information generating unit 65. Device identification information B1 shows an identifier for identifying whether the quality information is transmitted from either the video receive terminal 6 or the home gateway device 4. In the example of Fig. 5, the device identification information shows that the quality information is the first quality information transmitted from the video receive terminal 6, and is added to the first quality information by the first quality information generating unit 65. Sequence number C1 is used in order for the quality control system 8 to determine the order in which to use the first quality information when reproducing the degraded video. This sequence number C1 is incremented by "1" every time when the first quality information generating unit 65 generates the first quality information. The sequence number is generated and is added to the first quality information by the first quality information generating unit 65.

Viewing channel D1 shows the channel number of the video which the user is viewing, and is used by the quality control system 8 when the quality control system specifies the channel number when reproducing the degraded video. The first quality information generating unit 65 acquires the viewing channel from the video control unit 62, and adds this viewing channel to the first quality information. Resolution E1 shows the resolution of the video displayed on the TV. The video display terminal 9 uses the resolution as the one at the time of displaying the original video, the virtual degraded video, and the degraded video played back by the user side. The first quality information generating unit 65 acquires the resolution from the video control unit 62, and adds this resolution to the first quality information. Packet total number F1 shows the number of packets included in the quality measurement section currently being processed. A boundary between the quality measurement section and the next quality measurement section is determined by the determination of the packet total F1. The packet total number F1 is acquired by counting both each packet lost in the video stream and each packet which is not lost in the video stream as one packet.

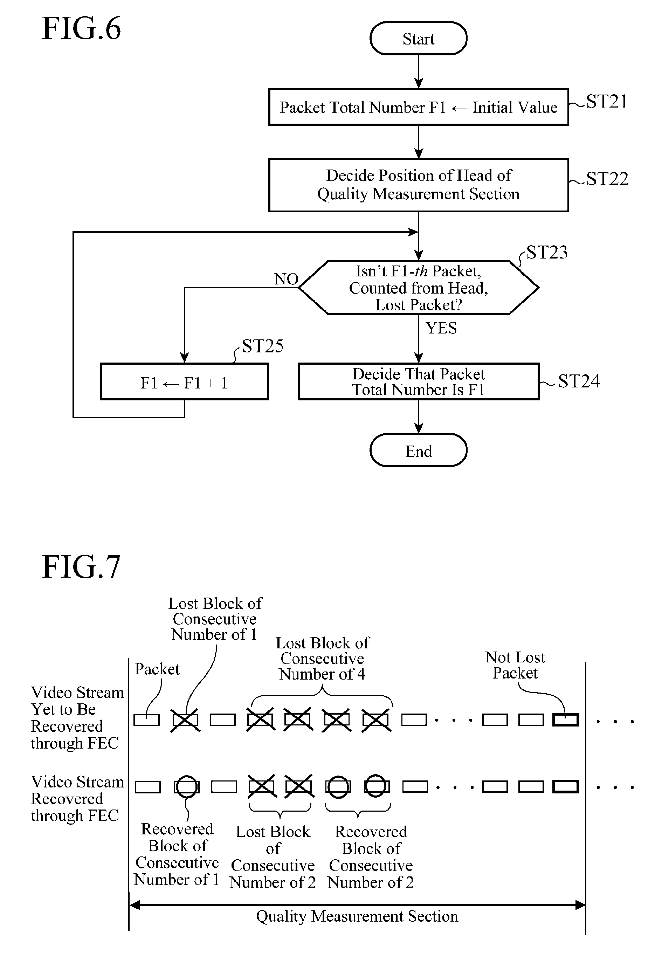

Next, a method of calculating the packet total number F1 will be explained with reference to Fig. 6. Fig. 6 is a flow chart showing the packet total number calculating process carried out by the first quality information generating unit of the video receive terminal in accordance with Embodiment 1. The first quality information generating unit provides an initial value of the packet total number F1 first (step ST21). The video receive terminal 6 can hold a fixed value as the initial value in advance. The first quality information generating unit then determines the position of the head of the quality measurement section in the video stream yet to be recovered through the FEC from the position of the end of the preceding quality measurement section for which the first quality information generating unit calculated the packet total number immediately before calculating the packet total number for the current quality measurement section (step ST22). When generating the packet total number F1 for the first time, the first quality information generating unit defines the first packet of the video stream distributed to the video receive terminal as the position of the head of the quality measurement section. The first quality information generating unit refers to the packet positioned at the F1-th position from the head of the quality measurement section to determine whether or not this packet is a lost packet (step ST23) . When, in step ST23, determining that the packet is not a lost packet, the first quality information generating unit decides that the packet total number is F1 (step ST24), and ends the processing. In contrast, when, in step ST23, determining that the packet is a lost packet, the first quality information generating unit increments the packet total number F1 by "1" (step ST25), and then returns to the determining process of step ST23.

The above-mentioned packet total number calculating process does not make the boundary between any two adjacent quality measurement sections divide consecutive packets into a lost block and a recovered block. A lost block stands for a block which consists of consecutive lost packets therein, and a recovered block stands for a block which consists of consecutive recovered packet which are recovered through the FEC. The number of packets included in each of these blocks is referred to as the consecutive number.

Fig. 7 is a view showing an example of lost blocks and recovered blocks. As shown in Fig. 7, in the video stream yet to be recovered through the FEC, the packets positioned before and after each lost block are packets that are not lost. In contrast, in the video stream recovered through the FEC, the packets positioned before and after each lost block are packets each of which is a not-lost packet or recovered packet. The packets positioned before and after each recovered block are packets each of which is a lost packet or not-lost packet. Each recovered block can be decided from a comparison between the video stream yet to be recovered through the FEC and the video stream recovered through the FEC. Each of the first quality information, the second quality information, and the quality control information includes statistical information about lost blocks and recovered blocks, and it is necessary to cause the boundary between any two adjacent quality measurement sections not to divide a lost block into two parts and not to divide a recovered block into two parts.

Returning to the explanation of Fig. 5, leading packet sequence number G1 shows the sequence number of the leading packet of the quality measurement section. The sequence number of an RTP packet can be alternatively provided as this leading packet sequence number G1. The quality control system 8 uses the leading packet sequence number when determining the head of the quality measurement section from the video stream. The leading packet sequence number is added to the first quality information by the first quality information generating unit 65. Packet average transfer delay time I1 is determined by the first quality information generating unit 65 by calculating the average of the transfer delay times of the packets included in the quality measurement section. The quality control system 8 uses the packet average transfer delay time when reproducing the degraded video played back by the user side. The transfer delay time of each packet is calculated from the difference between the time that the packet reached the communication unit 61 and the timestamp included in the packet. The timestamp of the RTP packet can be alternatively used.

In addition, the first quality information includes statistical information about lost blocks whose consecutive numbers range from a minimum of "1" to a maximum "packet total number of F1-1." The larger consecutive number each lost block has, the larger degree of degradation the video quality has. Therefore, the statistical information is generated for each consecutive number. The first quality information generating unit 65 generates this statistical information from the quality measurement section in the video stream recovered through the FEC. The quality control system 8 uses the statistical information when reproducing the degraded video played back by the user side on the basis of the probability distribution of the positions of the lost blocks.

In the example shown in Fig. 5, "lost block number", "average of lost block positions", and "variance of lost block positions" are defined as the statistical information. The lost block number is the number of lost blocks included in the quality measurement section. The lost block position of each lost block is a value which is acquired from determination of how-manieth packet from the leading packet of the quality measurement section the leading packet of the lost block is. The average and variance of lost block positions are the average and variance of the positions of the lost blocks. When the number of lost blocks is 0, the average and variance of lost block positions are not calculated. In addition to these values, a maximum, a minimum, a median, and a degree of distortion of the lost block positions can be included in the first quality information.

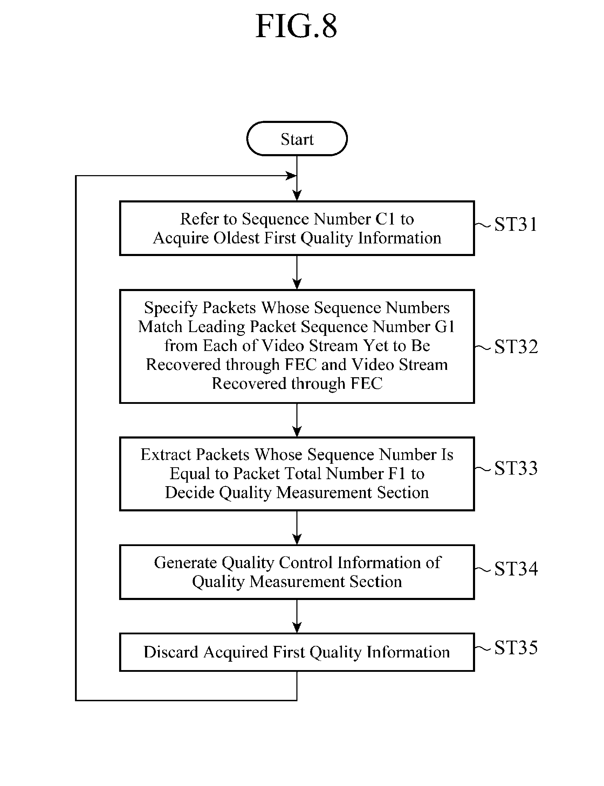

Next, the generating process of generating the quality control information will be explained with reference to Fig. 8. Fig. 8 is a flow chart showing the operation of the quality control information generating unit of the video receive terminal in accordance with Embodiment 1. The quality control information generating unit refers to the sequence number C1 included in the first quality information to acquire the oldest first quality information (step ST31). Next, the quality control information generating unit refers to both the sequence number of each packet included in the video stream yet to be recovered through the FEC, and the sequence number of each packet included in the video stream recovered through the FEC to specify the packets whose sequence numbers match the leading packet sequence number G1 included in the first quality information (step ST32). The quality control information generating unit extracts a number of packets whose number is equal to the packet total number F1 and which start from the specified packet from each of the video streams yet to be recovered and recovered through the FEC to decide the quality measurement section (step ST33). The quality control information generating unit generates the quality control information by using the decided quality measurement section yet to be recovered through the FEC and the decided quality measurement section recovered through the FEC (step ST34). In the generation of the quality control information of step ST34, the quality control information generating unit uses the first quality information acquired in step ST31. Finally, the quality control information generating unit discards the first quality information acquired in step ST31 (step ST35), and then returns to the process of step ST31.

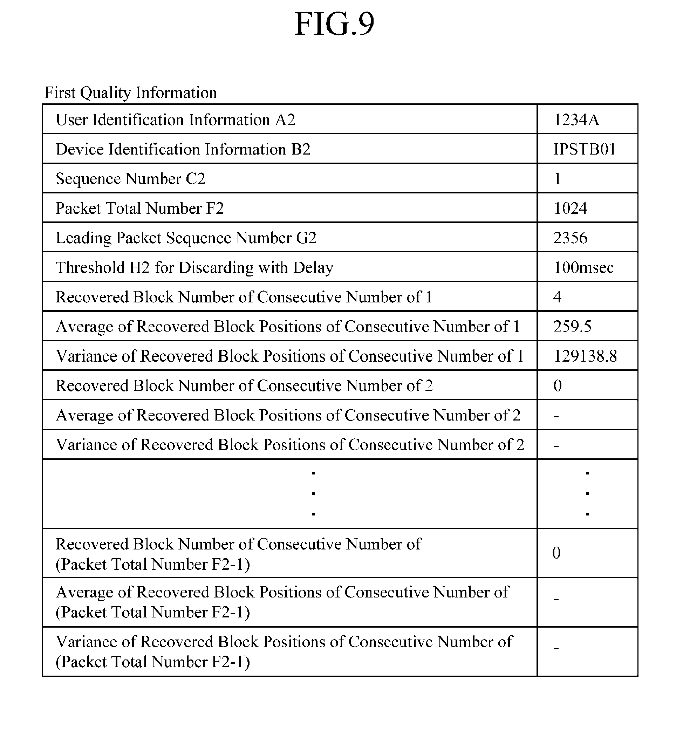

Fig. 9 is a view showing an example of the quality control information which the quality control information generating unit of the video receive terminal in accordance with Embodiment 1 generates. The video receive terminal 6 transmits this quality control information to the home gateway device 4. User identification information A2 and device identification information B2 which are respectively the same as the user identification information A1 and the device identification information B1 in the first quality information are added to the quality control information. When another user's device is connected to the system, the home gateway device 4 uses the user identification information A2 and the device identification information B2 to detect the other user's device. Sequence number C2 and packet total number F2 which are respectively the same as the sequence number C1 and the packet total number F1 in the first quality information are added to the quality control information. When generating the second quality information, the home gateway device 4 adds the sequence number and the packet total number to the quality control information. The quality control system 8 outputs the video by establishing synchronization between the second quality information from the home gateway device 4 and the first quality information from the video receive terminal 6 on the basis of the above-mentioned sequence number C2 and the above-mentioned packet total number F2.

Leading packet sequence number G2 which is the same as the leading packet sequence number G1 of the first quality information is added to the quality control information. The home gateway device 4 determines the head of the quality measurement section from the video stream on the basis of the leading packet sequence number G2. Threshold H2 for discarding with a delay shows a minimum of the transfer delay time of a packet which the video control unit 62 determines should be discarded. As an alternative, the video receive terminal 6 can hold a fixed value as the threshold. When generating the second quality information, the home gateway device 4 pseudoly generates a packet loss by using the threshold H2 for discarding with a delay. All of the user identification information A2, the device identification information B2, the sequence number C2, the packet total number F2, the leading packet sequence number G2, and the threshold H2 for discarding with a delay are added to the quality control information by the quality control information generating unit 67.

Next, the quality control information includes statistical information about recovered blocks whose consecutive numbers range from a minimum of "1" to a maximum "packet total number of F2-1." The statistical information is generated for each consecutive number, like the statistical information about lost blocks. The quality control information generating unit 67 generates this statistical information by making a comparison between the video stream yet to be recovered through the FEC and the video stream recovered through the FEC. The home gateway device 4 uses the statistical information to pseudoly perform packet recoveries on the basis of the probability distribution of the positions of packet recoveries when generating the second quality information. In the example shown in Fig. 9, "recovered block number", "average of recovered block positions", and "variance of recovered block positions" are defined as the statistical information. The recovered block number is the number of recovered blocks included in the quality measurement section. The recovered block position of each recovered block is a value which is acquired from determination of how-manieth packet from the leading packet of the quality measurement section the leading packet of the recovered block is. The average and variance of recovered block positions are the average and variance of the positions of the recovered blocks. When the number of recovered blocks is 0, the average and variance of recovered block positions are not calculated. In addition to these values, a maximum, a minimum, a median, and a degree of distortion of the recovered block positions can be included in the quality control information.

### [The structure of the home gateway device]

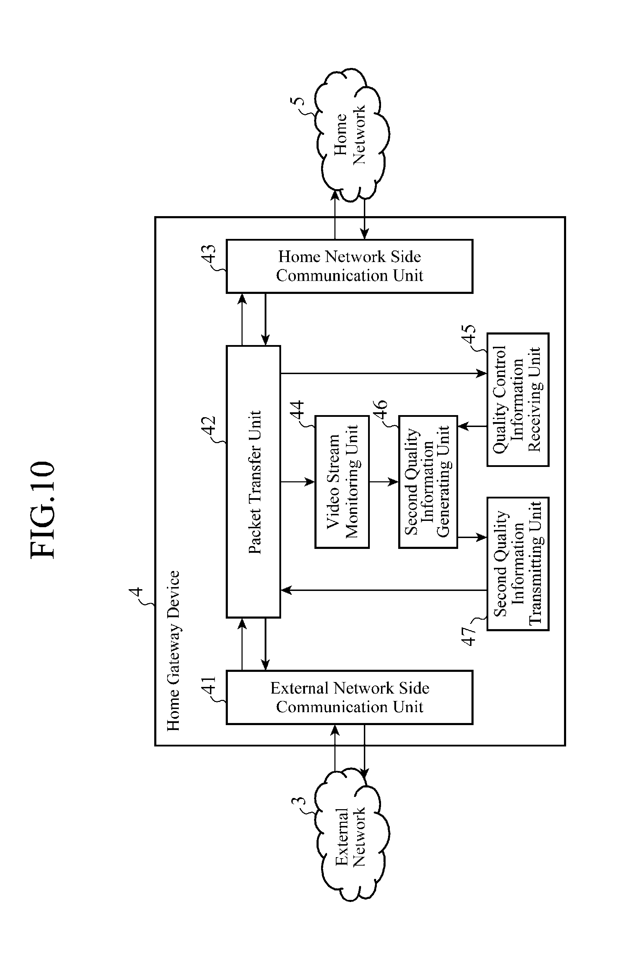

Next, the detailed structure of the home gateway device 4 will be explained. Fig. 10 is a block diagram showing the structure of the home gateway device in accordance with Embodiment 1. The home gateway device 4 is comprised of an external network side communication unit 41, a packet transfer unit 42, a home network side communication unit 43, a video stream monitoring unit (monitoring unit) 44, a quality control information receiving unit 45, a second quality information generating unit 46, and a second quality information transmitting unit 47.

The external network side communication unit 41 receives the video stream which the video delivery server 1 distributes to the home gateway device via the external network 3, and outputs the video stream to the packet transfer unit 42. The packet transfer unit 42 transfers the video stream received thereby to the home network side communication unit 43 and the video stream monitoring unit 44, and also transfers the quality control information received thereby to the quality control information receiving unit 45. The home network side communication unit 43 transmits the video stream inputted thereto to the video receive terminal 6 via the home network 5. The video stream monitoring unit 44 monitors the video stream inputted to the packet transfer unit 42 while acquiring the video stream, and transmits the video stream acquired thereby and notifies the time that the video stream monitoring unit acquired each packet in the above-mentioned video stream to the second quality information generating unit 46. The quality control information receiving unit 45 receives the quality control information which the video receive terminal 6 transmits to the home gateway device via the packet transfer unit 42, and outputs the quality control information to the second quality information generating unit 46.

The second quality information generating unit 46 carries out a packet discarding process with a pseudo delay and a recovery reflecting process with the FEC on the video stream acquired from the video stream monitoring unit 44 on the basis of the quality control information inputted thereto from the quality control information receiving unit 45, and, after that, generates the second quality information. The second quality information generating unit carries out these processes in order to reflect the degradation in the video quality and the recovery occurring in the video receive terminal 6 in the video stream, and the home gateway device 4 generates the second quality information as if the home gateway device 4 operates as the video receive terminal 6. The second quality information generated by the home gateway device 4 is generated for each quality measurement section, like the first quality information generated by the video receive terminal 6. The second quality information transmitting unit 47 receives the second quality information which the second quality information generating unit 46 generates, and transmits the second quality information to the quality control system 8 via the packet transfer unit 42.

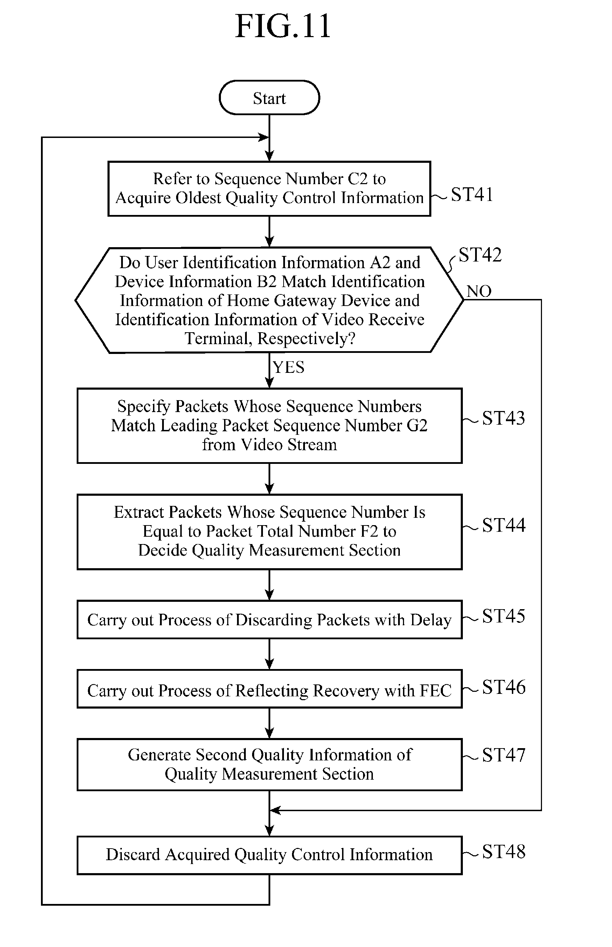

Next, the generating process of generating the second quality information will be explained with reference to Fig. 11. Fig. 11 is a flow chart showing the operation of the second quality information generating unit of the home gateway device in accordance with Embodiment 1. The second quality information generating unit refers to the sequence number C2 included in the quality control information to acquire the oldest quality control information (step ST41). Next, the second quality information generating unit refers to the quality control information acquired in step ST41 to determine whether the user identification information A2 matches the user identification information held by the home gateway device 4 and also determine whether the device information B2 matches the identification of the video receive terminal 6 (step ST42). When, in step ST42, determining that either of the user identification information and the device information does not match the corresponding information, the second quality information generating unit advances to a process of step ST48.

In contrast, when, in step ST42, determining that both the user identification information and the device information match the pieces of corresponding information, respectively, the second quality information generating unit refers to the sequence number of each packet included in the video stream, and specifies the packets each of which has a sequence number matching the leading packet sequence number G2 included in the quality control information, extracts a number of packets whose number is equal to the packet total number F2 from the packets specified thereby, and decides the quality measurement section for the video stream (step ST44). The second quality information generating unit carries out the packet discarding process with a delay on the quality measurement section decided in step ST44 (step ST45), and further carries out the recovery reflecting process with the FEC on the quality measurement section (step ST46). The second quality information generating unit also generates the second quality information by using the decided quality measurement section (step ST47). The second quality information generating unit uses the quality control information acquired in step ST41 for the generation of the second quality information. Finally, the second quality information generating unit discards the quality control information acquired in step ST41 (step ST48), and returns to the process of step ST41.

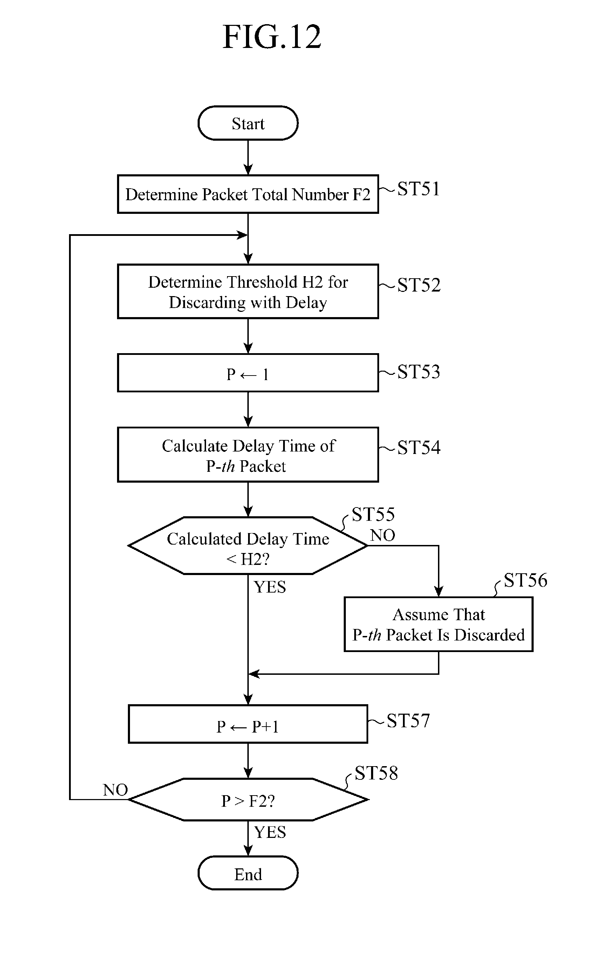

Next, the above-mentioned process in step ST45 will be explained in greater detail with reference to Fig. 12. Fig. 12 is a flow chart showing the packet discarding process with a delay which is carried out by the second quality information generating unit of the home gateway device in accordance with Embodiment 1. The second quality information generating unit refers to the quality control information to determine the value of the packet total number F2 (step ST51) while specifying the value of the threshold H2 for discarding with a delay (step ST52). The second quality information generating unit sets an initial value 1 to a variable P for storing the position of the packet to be processed (step ST53). The second quality information generating unit calculates the transfer delay time of the P-th packet counted from the head of the quality measurement section (step ST54). The second quality information generating unit uses the time information received from the video stream monitoring unit 44 as the time that the packet reached the packet transfer unit 42.

The second quality information generating unit then determines whether or not the transfer delay time calculated in step ST54 is smaller than the threshold H2 for discarding with a delay (step ST55). When, in step ST55, determining that the transfer delay time is smaller than the threshold H2 for discarding with a delay, the second quality information generating unit advances to a process of step ST57, whereas when determining that the transfer delay time is equal to or larger than the threshold H2 for discarding with a delay, the second quality information generating unit assumes that the P-th packet is discarded and removes this packet from the quality measurement section (step ST56). After that, the second quality information generating unit increments the value of the variable P by "1" (step ST57), and determines whether or not the value of the variable P is larger than the packet total number F2 (step ST58). When, in step ST58, determining that the value of the variable P is equal to or smaller than the packet total number F2, the second quality information generating unit returns to the process of step ST54, whereas when determining that the value of the variable P is larger than the packet total number F2, the second quality information generating unit ends the processing.

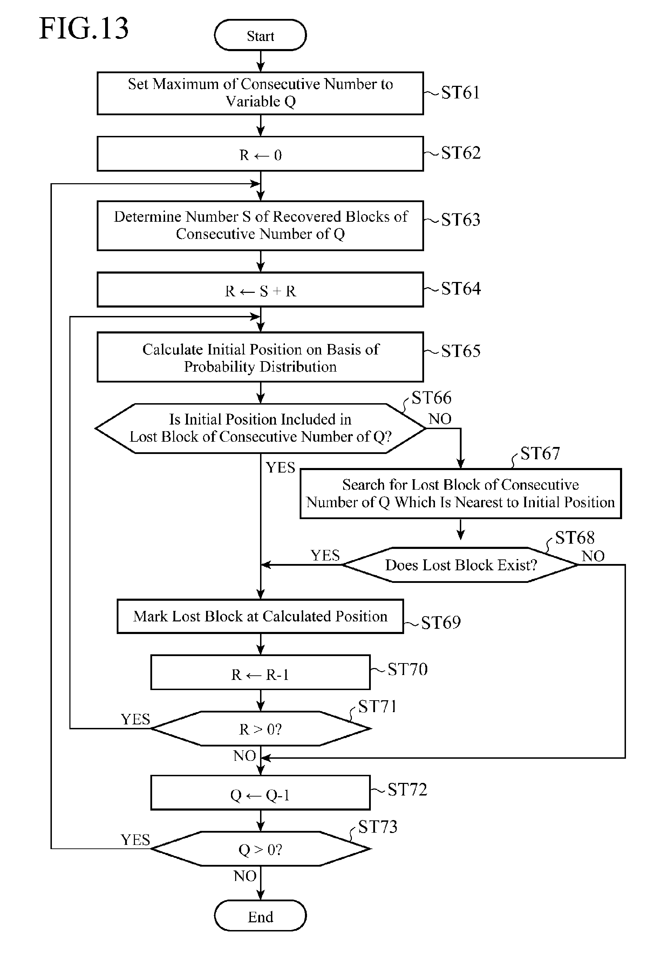

Next, the above-mentioned process in step ST46 will be explained in greater detail with reference to Fig. 13. Fig. 13 is a flow chart showing the recovery reflecting process with the FEC which is carried out by the second quality information generating unit of the home gateway device in accordance with Embodiment 1. The second quality information generating unit refers to the statistical information about recovered blocks which is included in the quality control information to acquire the maximum of the consecutive number, and sets this maximum of the consecutive number to a variable Q (step ST61). The second quality information generating unit initializes a variable R to 0 (step ST62). The second quality information generating unit uses the variable R in order to hold the remaining number of times that the second quality information generating unit will carry out the reflecting process of reflecting recovered blocks each having a consecutive number of Q. The second quality information generating unit refers to the quality control information to determine the number S of recovered blocks each having a consecutive number of Q (step ST63). The second quality information generating unit substitutes the sum of the number S of recovered blocks each having a consecutive number of Q and the variable R into the variable R (step ST64).

The second quality information generating unit then calculates an initial position of a lost block which the second quality information generating unit will recover on the basis of a prepared probability distribution (step ST65). Concretely, the second quality information generating unit 46 generates a random number to calculate an initial position according to the probability distribution. At this time, the second quality information generating unit takes a measure of setting the probability outside the section to "0" in such a way that the initial position is not placed outside the quality measurement section. The second quality information generating unit can acquire the probability distribution by applying the statistical information about the positions of the recovered blocks each having a consecutive number of Q to a probability model which is estimated according to the network conditions and the FEC method. The second quality information generating unit can alternatively use a probability distribution varying according to the consecutive number.

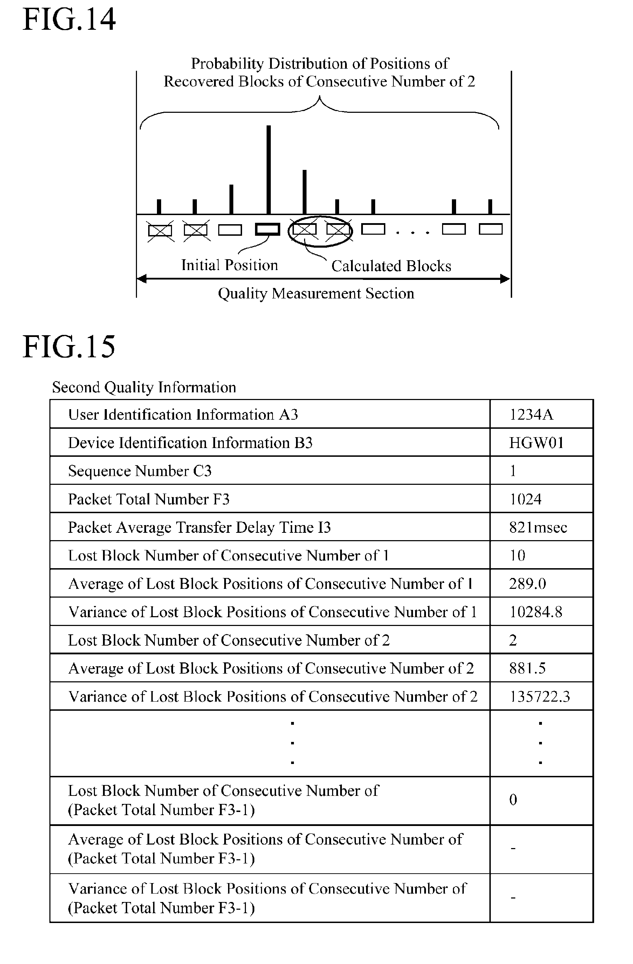

The second quality information generating unit then refers to the packet at the initial position which the second quality information generating unit calculates in step ST65 to determine whether or not the above-mentioned packet is included in a lost packet block having a consecutive number of Q (step ST66). When, in step ST66, determining that the above-mentioned packet is included in a lost packet block having a consecutive number of Q, the second quality information generating unit advances to step ST69. In contrast, when, in step ST66, determining that the above-mentioned packet is not included in a lost packet block having a consecutive number of Q, the second quality information generating unit searches for a lost block having a consecutive number of Q which is the nearest to the calculated initial position (step ST67) to determine whether such a lost block exists (step ST68). An example of the search for a lost block of step ST67 is shown in Fig. 14. The example of Fig. 14 shows a search for a lost block having a consecutive number of 2, and the second quality information generating unit selects a lost block having a consecutive number of 2 which is the nearest to the initial position because the initial position is not included in a lost block having a consecutive number of 2.

When, in step ST68, determining that there exists a lost block having a consecutive number of Q which is the nearest to the initial position, the second quality information generating unit advances to a process of step ST69, whereas when determining that such a lost block does not exist, the second quality information generating unit advances to a process of step ST72. When no lost block having a consecutive number of Q exists in the quality measurement section, the second quality information generating unit adds the remaining number R of times that the second quality information generating unit will carry out the reflecting process of reflecting recovered blocks to that of the reflecting process of reflecting recovered blocks each having a consecutive number of Q-1. The second quality information generating unit assumes that the lost blocks determined in steps ST66 and ST67 have been recovered through the FEC, and marks each of the lost blocks (step ST69). Each lost block which is marked in step ST69 is assumed to have no packet loss when the second quality information will be generated.

The second quality information generating unit then decrements the value of the variable R which is the remaining number of times that the second quality information generating unit will carry out the reflecting process of reflecting recovered blocks by one (step ST70) . Next, the second quality information generating unit determines whether or not the value of the variable R is larger than zero (step ST71). When, in step ST71, determining that the variable R is larger than 0, the second quality information generating unit returns to the process of step ST65 and repeats the above-mentioned processing. In contrast, when, in step ST71, determining that the variable R is equal to or smaller than 0, the second quality information generating unit decrements the value of the variable Q by one (step ST72), and determines whether or not the value of the variable Q is larger than zero (step ST73) . When, in step ST73, determining that the variable Q is larger than 0, the second quality information generating unit returns to the process of step ST63 and repeats the above-mentioned processing. In contrast, when, in step ST73, determining that the variable Q is equal to or smaller than 0, the second quality information generating unit ends the processing.

Fig. 15 is a view showing an example of the second quality information which the second quality information generating unit of the home gateway device in accordance with Embodiment 1 generates. The home gateway device 4 transmits this second quality information to the quality control system 8. User identification information A3 and device identification information B3 which are respectively the same as the user identification information A1 and the device identification information B1 of the first quality information are added to the second quality information. When another user's device is connected to the system, the home gateway device 4 uses the user identification information and the device identification information to detect the other user's device. The user identification information A3 is information used for identifying the user when the quality control system 8 reproduces the degraded video. When the user is the same as the user of the video receive terminal 6, the user identification information A3 has the same value as the user identification information A1 of the first quality information which the video receive terminal 6 transmits to the quality control system. The device identification information B3 is used by the quality control system 8 to identify whether the quality information is transmitted from either the video receive terminal 6 or the home gateway device 4. In the example shown in Fig. 15, the identification information of the home gateway device 4 is added to the second quality information as the identification information B.

Sequence number C3 and packet total number F3 which are respectively the same as the sequence number C2 and the packet total number F2 of the quality control information are added to the second quality information. Packet average transfer delay time I3 is calculated according to the same procedure as that according to which the packet average transfer delay time I1 of the first quality information of the video receive terminal 6 is calculated, and the time information acquired from the video stream monitoring unit 44 is used as the time that each packet reached the packet transfer unit 42. When reproducing the virtual degraded video, the quality control system 8 uses this packet average transfer delay time I3. All of the user identification information A3, the device identification information B3, the sequence number C3, the packet total number F3, and the packet average transfer delay time I3 are added to the second quality information by the second quality information generating unit 46.

The second quality information further includes the statistical information about lost blocks whose consecutive numbers range from a minimum of "1" to a maximum "packet total number of F3-1." The quality control system 8 uses this statistical information when reproducing the virtual degraded video on the basis of the probability distribution of packet losses. The statistical information is calculated according to the same procedure as that according to which the video receive terminal 6 calculates the statistical information, and the second quality information can include a maximum, a minimum, a median, and a degree of distortion of the lost block positions in addition to the pieces of information in the example shown in Fig. 15.

### [The structure of the quality control system]

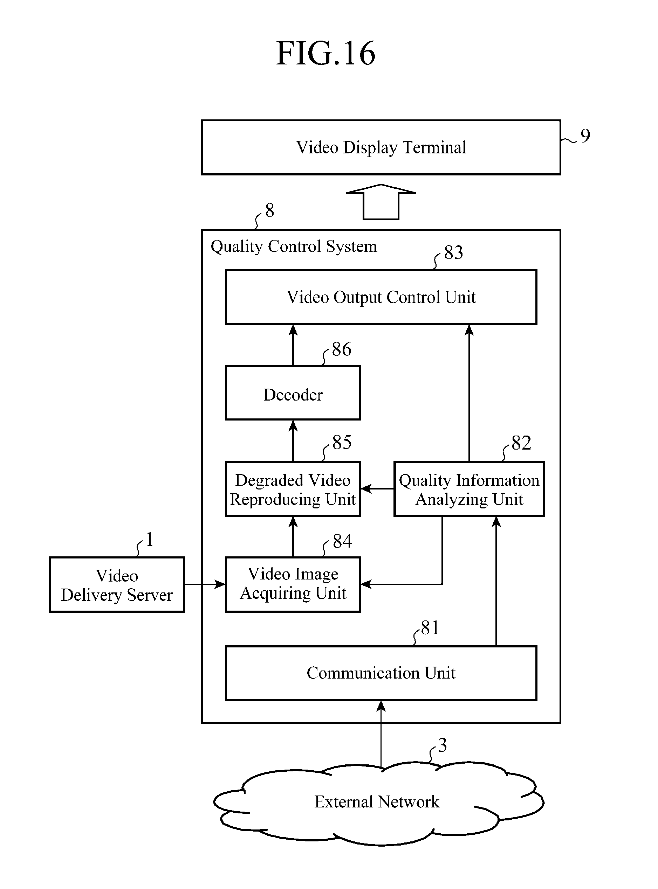

Next, the detailed structure of the quality control system 8 will be explained. Fig. 16 is a block diagram showing the structure of the quality control system in accordance with Embodiment 1. The quality control system 8 is comprised of a communication unit 81, a quality information analyzing unit 82, a video output control unit 83, a video acquiring unit 84, a degraded video reproducing unit 85, and a decoder 86. The communication unit 81 receives the first quality information and the second quality information which the video receive terminal 6 and the home gateway device 4 transmit respectively from the external network 3, and outputs the first quality information and the second quality information to the quality information analyzing unit 82. The quality information analyzing unit 82 analyzes the quality information inputted thereto. More specifically, the quality information analyzing unit refers to the user identification information included in the quality information to identify which user has transmitted the quality information to the quality control system, and also refers to the device identification information to identify which one of the video receive terminal 6 and the home gateway device 4 has transmitted the quality information to the quality control system. Further, the quality control system 8 enables a maintenance person to carry out a selection operation of selecting a user for which this quality control system 8 displays a degraded video on the video display terminal 9 thereon. In this case, the quality information analyzing unit 82 processes the quality information of the user selected. Hereafter, an explanation will be made assuming that one user is selected.

The quality information analyzing unit 82 refers to the resolution E1 included in the first quality information of the video receive terminal 6 to set this resolution to the quality information video output control unit 83, and also refers to the viewing channel D1 to set this viewing channel to the video acquiring unit 84. The quality information analyzing unit 82 also outputs the first quality information and the second quality information respectively received from the home gateway device 4 and the video receive terminal 6 to the degraded video reproducing unit 85. The quality information video output control unit 83 outputs each of the original video, the virtual degraded video, and the degraded video played back by the user side to the video display terminal 9 with the resolution E1 set by the quality information analyzing unit 82. The video acquiring unit 84 acquires the video stream of the viewing channel D1 set by the quality information analyzing unit 82 from the video streams distributed to the quality control system from the video delivery server 1. The video acquiring unit also outputs the video stream acquired thereby to the degraded video reproducing unit 85.

The degraded video reproducing unit 85 carries out the process of reproducing the virtual degraded video on the video stream inputted thereto from the video acquiring unit 84 on the basis of the second quality information of the home gateway device 4 while carrying out the process of reproducing the degraded video played back by the user side on the video stream on the basis of the first quality information of the video receive terminal 6. The video stream on which the process of reproducing the virtual degraded video and the process of reproducing the degraded video played back by the user side are carried out, and the video stream of the original video are outputted to the decoder 86. The decoder 86 decodes the video packets inputted thereto from the degraded video reproducing unit 85, and outputs the video packets decoded thereby to the video output control unit 83.

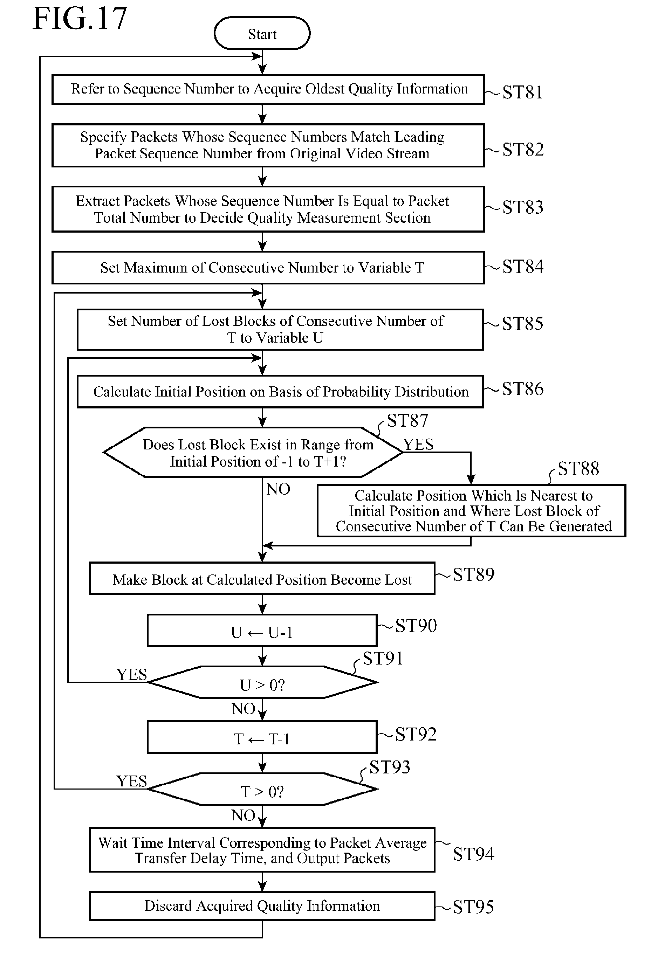

Next, the process of reproducing the degraded video will be explained with reference to Fig. 17. Fig. 17 is a flow chart showing the operation of the degraded video reproducing unit of the quality control system in accordance with Embodiment 1. A method of reproducing the virtual degraded video is the same as a method of reproducing the degraded video played back by the user side, and both the methods are implemented by carrying out the process shown in the flow chart mentioned hereafter. Therefore, the explanation will be made hereafter by simply describing the first quality information and the second quality information as quality information including both of them without specifying that the quality information is the first or second quality information. The reproduction of the virtual degraded video differs from the reproduction of the degraded video played back by the user side only in that the reproduction of the virtual degraded video uses the second quality information from the home gateway device 4 while the reproduction of the degraded video uses the first quality information from the video receive terminal 6.

First, the degraded video reproducing unit refers to the sequence number C included in the quality information to acquire the oldest quality information (step ST81). The degraded video reproducing unit then refers to the sequence number of each packet included in the video stream inputted thereto from the video acquiring unit 84 to specify the packets whose sequence numbers match the leading packet sequence number G included in the quality information acquired in step ST81 (step ST82) . The degraded video reproducing unit extracts a number of packets whose number is equal to the packet total number F from the packets specified thereby in step ST82 to decide a quality measurement section in the video stream (step ST83). The degraded video reproducing unit uses the packet total number which is included in the quality information as the packet total number F. The degraded video reproducing unit refers to the statistical information about lost blocks included in the quality information to acquire a maximum of the consecutive number and set this maximum to a variable T (step ST84). The degraded video reproducing unit also refers to the quality information to acquire the number U of lost blocks each having a consecutive number of T and set this number to a variable U (step ST85).

The degraded video reproducing unit then calculates an initial position of a block to be lost on the basis of a prepared probability distribution (step ST86). Concretely, the degraded video reproducing unit 85 generates a random number to calculate an initial position of a block according to the probability distribution. At this time, the second quality information generating unit takes a measure of setting the probability outside the section to "0" in such a way that the initial position is not placed outside the quality measurement section. The second quality information generating unit can acquire a probability function by applying the statistical information about the positions of the lost locks each having a consecutive number of T to a probability model which is estimated according to the network conditions. The second quality information generating unit can alternatively use a probability distribution varying according to the consecutive number.

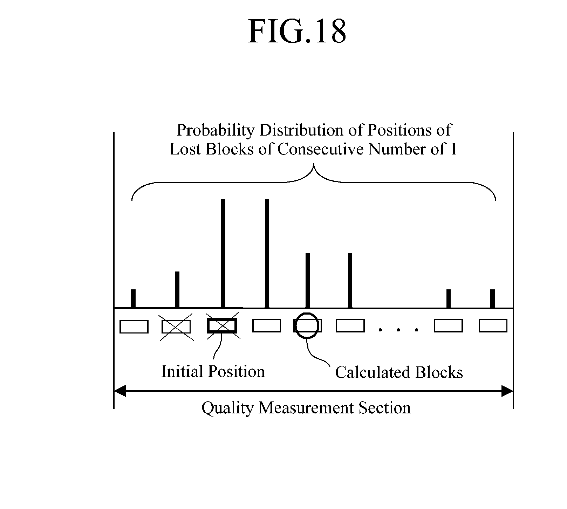

Next, the degraded video reproducing unit determines whether a lost block exists in a region from the initial position of -1 to a consecutive number of T+1 (step ST87). When, in step ST87, determining that no lost block exists in the region, the degraded video reproducing unit advances to a process of step ST89. In contrast, when, in step ST87, determining that a lost block exists in the region, the degraded video reproducing unit searches for a position which is the nearest to the calculated initial position and where a lost block having a consecutive number of T can be generated (step ST88). A lost block having a consecutive number of T must neither overlap any other lost block nor be contiguous to any other lost block. An example of the search in step ST88 for a lost block which can be generated is shown in Fig. 18. In the example of Fig. 18, a search for a lost block having a consecutive number of 1 is shown. Because the initial position is included in a lost block having a consecutive number of 2 in the example, the position which is the nearest to the initial position and where a lost block having a consecutive number of 1 can be generated is selected.

Next, the degraded video reproducing unit makes the lost block at the position determined in step ST88 in the quality measurement section become lost (step ST89). The degraded video reproducing unit decrements the value of the variable U by one (step ST90), and determines whether or not the value of the variable U is larger than zero (step ST91). When, in step ST91, determining that the value of the variable U is larger than 0, the degraded video reproducing unit returns to the process of step ST86 and repeats the above-mentioned processing. In contrast, when, in in step ST91, determining that the value of the variable U is equal to or smaller than 0, the degraded video reproducing unit decrements the value of the variable T by one (step ST92), and determines whether or not the value of the variable T is larger than zero (step ST93).

When, in step ST93, determining that the value of the variable U is larger than 0, the degraded video reproducing unit returns to the process of step ST85 and repeats the above-mentioned processing. In contrast, when, in step ST93, determining that the value of the variable T is equal to or smaller than 0, the degraded video reproducing unit waits a time interval corresponding to the packet average transfer delay time I included in the quality information, and outputs each packet in the quality measurement section to the decoder 86 (step ST94). Before starting waiting the time interval corresponding to the average transfer delay time I in step ST94, the degraded video reproducing unit establishes synchronization among the original video, the virtual degraded video, and the degraded video played back by the user side. By establishing synchronization among them, the degraded video reproducing unit can determine what differences in delay have occurred among the videos. After that, the degraded video reproducing unit discards the quality information acquired in step ST81 (step ST95), and then returns to step ST81 and repeats the above-mentioned processing.

As mentioned above, the video reproduction system in accordance with this Embodiment 1 is constructed in such a way that the video receive terminal 6 generates first quality information, the home gateway device 4 generates second quality information, the quality control system 8 reproduces a degraded video played back by a user side on the basis of the first quality information, and also reproduces a virtual degraded video on the basis of the second quality information, and the video display terminal 9 makes it possible to simultaneously check the original video, the virtual degraded video, and the degraded video played back by the user side. Therefore, the video reproduction system makes it possible to determine where on the network quality degradation has occurred. More specifically, the video reproduction system makes it possible to determine whether a cause of quality degradation exists on the external network 3 or on the home network 5. Further, the video reproduction system makes it possible to easily analyze the end-user quality of experience.

### Embodiment 2.

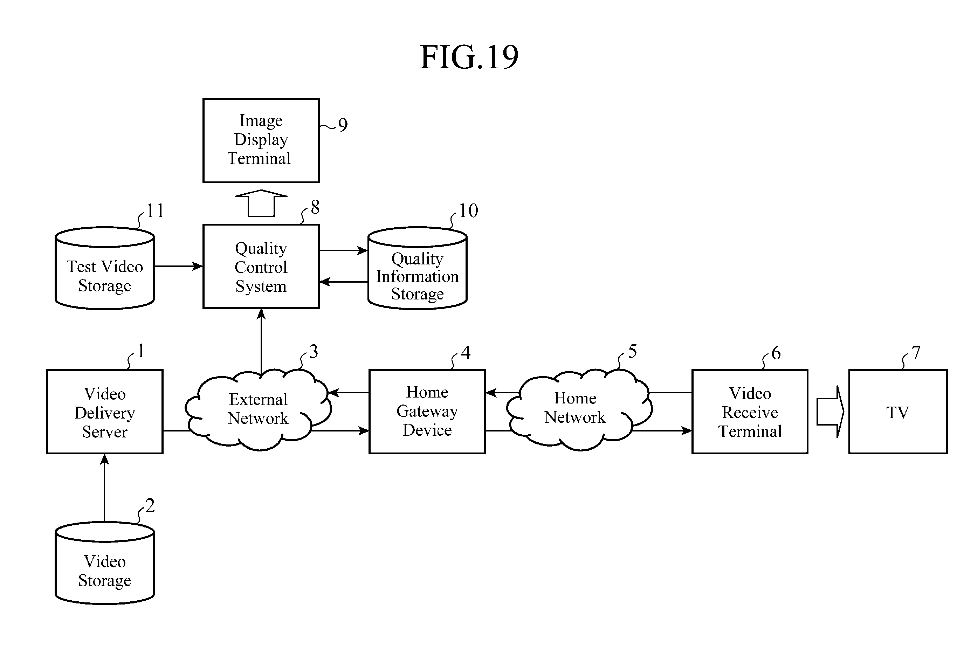

Fig. 19 is a view showing the structure of a video reproduction system in accordance with Embodiment 2 of the present invention. As shown in Fig. 19, the video reproduction system in accordance with this Embodiment 2 differs from that according to above-mentioned Embodiment 1 in that the video reproduction system additionally includes a quality information storage 10 and a test video storage (video storage) 11, and a quality control system 8 accesses the quality information storage 10 and the test video storage 11. Because the other structural components of the video reproduction system are the same as those of the video reproduction system in accordance with Embodiment 1, the components are designated by the same reference numerals as those shown in Fig. 1 and the explanation of the components will be omitted or simplified hereafter. Although the reproduction of a degraded video for a video which a user is viewing actually is explained in Embodiment 1, the reproduction of a degraded video using an arbitrary video will be explained in this Embodiment 2.

The quality control system 8 stores first quality information and second quality information which are respectively received from a video receive terminal 6 and a home gateway device 4 in the quality information storage 10. When carrying out a process of reproducing a degraded video, the quality control system 8 reads the first quality information and the second quality information which are stored in the quality information storage 10. An arbitrary video stream is stored in the test video storage 11 in advance. When carrying out the process of reproducing the degraded video, the quality control system 8 reads the video stream stored in the test video storage 11. As a result, the quality control system can reproduce the degraded video by using an arbitrary video.

### [The structure of the quality control system]

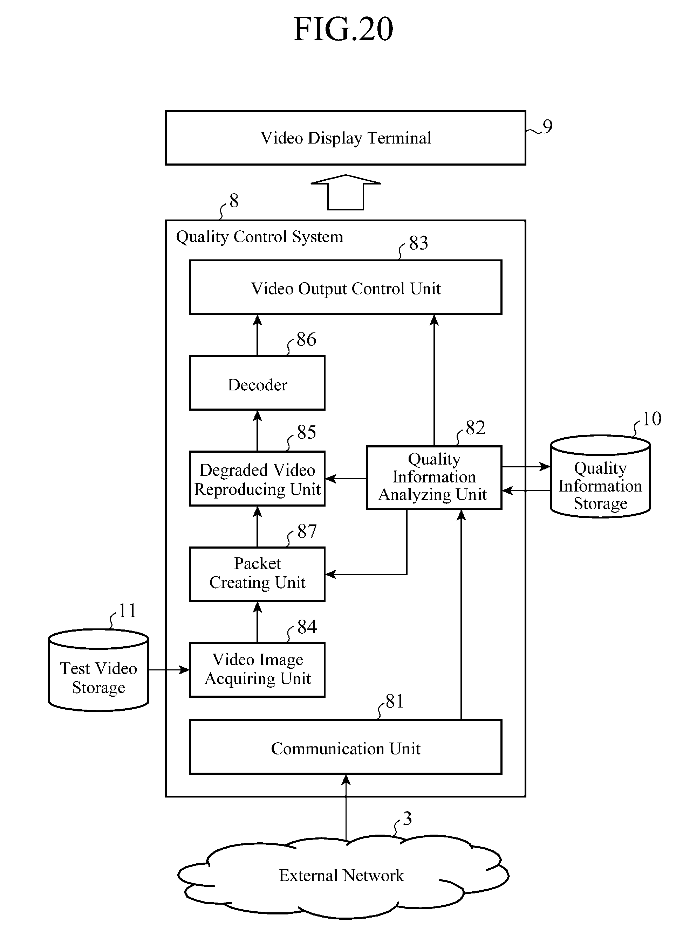

Next, the detailed structure of the quality control system 8 will be explained. Fig. 20 is a block diagram showing the structure of the quality control system in accordance with Embodiment 2. A quality information analyzing unit 82 receives the first quality information and the second quality information which are respectively inputted thereto from the video receive terminal 6 and the home gateway device 4 via a communication unit 81, and stores them in the quality information storage 10. When the quality control system reproduces the degraded video, the quality information analyzing unit 82 further reads the first quality information and the second quality information from the quality information storage 10, and then carries out a process of analyzing the first quality information and the second quality information read thereby. The quality information analyzing unit 82 carries out a process of setting the sequence number G1 of a leading packet included in the first quality information to a packet creating unit 87, instead of the process of setting the viewing channel D1 included in the first quality information of the video receive terminal 6 to a video acquiring unit 84, which is shown in Embodiment 1. The quality control system 8 can be constructed in such a way as to enable a maintenance person to carry out a selection operation of selecting the quality information which is to be acquired from the quality information storage 10 thereon.

The video acquiring unit 84 acquires the video stream stored in the examination video storage 11. The video acquiring unit 84 does not use the viewing channel D1 included in the first quality information from the video receive terminal 6, unlike that in accordance with Embodiment 1. Because the video stream stored in the test video storage 11 is an encoded content, but is not RTP-packetized, the video acquiring unit 84 outputs the acquired video stream to the packet creating unit 87. The packet creating unit 87 packetizes the video stream inputted thereto from the video acquiring unit 84 into RTP packets, and outputs these RTP packets to a degraded video reproducing unit 85. When packetizing the video stream into RTP packets, the packet creating unit 87 assigns sequence numbers starting from the leading packet sequence number acquired from the quality information analyzing unit 82 to the RTP packets in increasing order.
After that, by performing the same operation as that shown in Embodiment 1, the quality control system displays the video on a video display terminal 9.

In the reproducing process of reproducing the degraded video in accordance with Embodiment 2, the degraded video reproducing unit, in step ST82 of the sequence shown in Fig. 17, refers to the sequence number of each packet included in the video stream inputted from the packet creating unit 87, and specifies the packets whose sequence numbers match the leading packet sequence number. The other processes are the same as those in accordance with Embodiment 1.

As mentioned above, because the video reproduction system in accordance with this Embodiment 2 is constructed in such a way as to reproduce a degraded video by using quality information stored in the quality information storage 10 and a video stream stored in the test video storage 11, the video reproduction system can reproduce not only the degraded video which the user is viewing actually but also an arbitrary video. As a result, the video reproduction system can analyze the end-user quality of experience in consideration of the influence of distribution of contents.

### Embodiment 3.

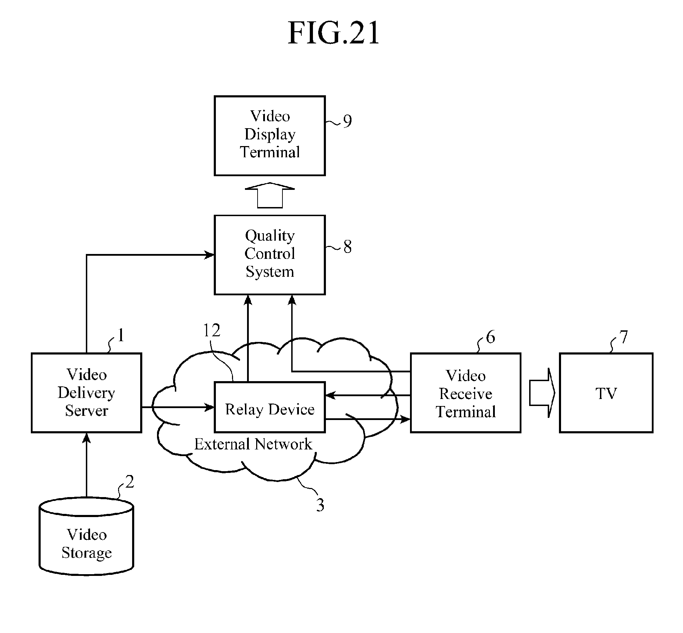

Fig. 21 is a view showing the structure of a video reproduction system in accordance with Embodiment 3 of the present invention. The video reproduction system in accordance with Embodiment 3 includes a relay device 12 instead of the home gateway device 4 shown in Embodiment 1. The relay device 12 carries out the same operation as that of the home gateway device 4. Because the other structural components of the video reproduction system are the same as those of the video reproduction system in accordance with Embodiment 1, the components are designated by the same reference numerals as those shown in Fig. 1 and the explanation of the components will be omitted or simplified hereafter. The structure in accordance with Embodiment 3 can also be applied to Embodiment 2.

The relay device 12 is placed in an external network 3, and exists on a video delivery route extending from a video delivery server 1 to a video receive terminal 6. The relay device 12 generates second quality information by using quality control information received from the video receive terminal 6 and a video stream which the relay device is monitoring, like the home gateway device 4. The relay device transmits the second quality information generated thereby to a quality control system 8.

As mentioned above, because the video reproduction system in accordance with this Embodiment 3 is constructed in such a way as to include the relay device 12 in the external network 3 within the video delivery route extending from the video delivery server 1 to the video receive terminal 6, the video reproduction system can reproduce not only a virtual degraded video in the home gateway device 4 but also a virtual degraded video in the relay device 12. As a result, the video reproduction system can determine where on the external network 3 a cause of the quality degradation exists.

### Embodiment 4.

In above-mentioned Embodiment 1 to Embodiment 3, the structure of calculating statistical information from lost blocks of different consecutive numbers and recovered blocks of different consecutive numbers included in the quality measurement section to generate first quality information, second quality information, and quality control information is shown. In contrast with this, in this Embodiment 4, a structure of determining in which frame type (e.g., I frame, B frame, or P frame) each of lost and recovered blocks is included to calculate statistical information when a video stream is interframe-encoded according to a video codec, such as MPEG, is shown. In this structure, the degree of quality degradation differs according to what type of frame is lost or recovered. Therefore, a video reproduction system according to this embodiment generates first quality information, second quality information, and quality control information to each of which information about a frame type is added.

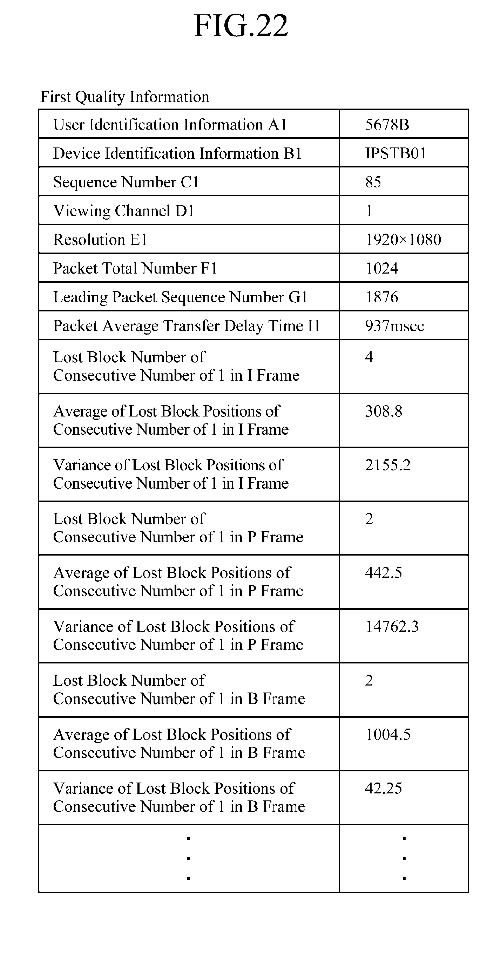

Fig. 22 is a view showing an example of the first quality information generated by a quality information generating unit of a video receive terminal in accordance with this Embodiment 4. As shown in Fig. 22, the first quality information includes the information about a frame type, and statistical information about lost blocks having different consecutive numbers is calculated for each of I, B and P frames. This first quality information is outputted to a quality control system 8, and, when reproducing a degraded video, the quality control system 8 prepares a probability distribution for each of I, B and P frames and makes blocks of the frame type become lost. The video reproduction system carries out the same process on both the second quality information which a home gateway device 4 generates and the quality control information which a video receive terminal 6 generates.

As mentioned above, because the video reproduction system in accordance with this Embodiment 4 is constructed in such a way as to reproduce a degraded video in which a recovery of packets and packet losses according to a frame type are reflected, the video reproduction system can reproduce the degraded video more correctly.

### INDUSTRIAL APPLICABILITY

As mentioned above, because the video reproduction system in accordance with the present invention can determine a point on a network where quality degradation occurs in a video communication service and further enables a video communication service provider to analyze the end-user quality of experience easily, the video reproduction system is suitable for use in a system that reproduces a video in which degradation has occurred when this video is provided for the user in a service of carrying out video communications in real time, and so on.

### EXPANATIONS OF REFERENCE NUMERALS

1 video delivery server, 2 video storage, 3 external network, 4 home gateway device, 5 home network, 6 video receive terminal, 7 TV, 8 quality control system, 9 video display terminal, 10 quality information storage, 11 test video storage, 12 relay device, 41 external network side communication unit, 42 packet transfer section, 43 home network side communication unit, 44 video stream monitoring unit, 45 quality control information receiving unit, 46 second quality information generating unit, 47 second quality information transmitting unit, 61 communication unit, 62 video control unit, 63 decoder, 64 video output control unit, 65 first quality information generating unit, 66 first quality information transmitting unit, 67 quality control information generating unit, 68 quality control information transmitting unit, 81 communication unit, 82 quality information analyzing unit, 83 video output control unit, 84 video acquiring unit, 85 degraded video reproducing unit, 86 decoder, 87 packet creating unit, 91 original video display unit, 92 virtual degraded video display unit, 93 user playback degraded video display unit.

## Claims

1. A video reproduction system that reproduces quality degradation occurring in a video communication service which is provided via an exterior network and a home network, said video reproduction system comprising:
a video receive terminal for generating both first quality information for reproducing a degraded video which is played back by a user side from a video stream distributed thereto via said external network and said home network, and quality control information based on said first quality information;
a home gateway device for generating second quality information for reproducing a virtual degraded video from which an influence of quality degradation caused by said home network is removed on a basis of said quality control information; and
a quality control system for reproducing the degraded video which is played back by the user side by using both an original video stream which is yet to be distributed via said external network and said first quality information while reproducing the virtual degraded video by using both said original video stream and said second quality information.

2. The video reproduction system according to claim 1, wherein each of said first quality information and said second quality information includes statistical information about positions of packets, among packets included in the video stream, which are collected for each number of consecutive lost packets, and a packet average transfer delay time.

3. The video reproduction system according to claim 1, wherein said quality control information includes statistical information about positions of packets, among packets included in the video stream, which are collected for each number of consecutive recovered packets which are recovered through an FEC (Forward Error Correction) process, and a minimum of a packet transfer delay time by which said video receive terminal determines to carry out packet discarding.

4. The video reproduction system according to claim 1, wherein said video receive terminal includes a first quality information generating unit for generating the first quality information from the video stream distributed thereto, a first quality information transmitting unit for transmitting said first quality information to the quality control system, a quality control information generating unit for generating the quality control information on a basis of both said video stream distributed thereto and said first quality information, and a quality control information transmitting unit for transmitting said quality control information to the home gateway device.

5. The video reproduction system according to claim 4, wherein said first quality information generating unit refers to the video stream which is yet to be recovered through an FEC process to divide the video stream into packets in units of a section for which said first quality information generating unit generates the first quality information without dividing consecutive lost packets and consecutive recovered packets.

6. The video reproduction system according to claim 1, wherein said home gateway device includes a monitoring unit for monitoring the video stream distributed to the video receive terminal, a quality control information receiving unit for receiving the quality control information transmitted to said home gateway device from said video receive terminal, a second quality information generating unit for generating the second quality information by using both the video stream monitored by said monitoring unit and the quality control information received by said quality control information receiving unit, and a second quality information transmitting unit for transmitting said second quality information to the quality control system.

7. The video reproduction system according to claim 6, wherein said second quality information generating unit pseudoly carries out a recovering process with an FEC on the video stream monitored by said monitoring unit by using both statistical information about recovered packets which are recovered through an FEC process and a probability distribution of the recovered packets, the statistical information and the probability distribution being included in the quality control information.

8. The video reproduction system according to claim 6, wherein said second quality information generating unit pseudoly carries out a packet discarding process with a packet transfer delay on the video stream monitored by said monitoring unit by using a minimum of a packet transfer delay time by which said video receive terminal determines to carry out packet discarding, the minimum being included in the quality control information.

9. The video reproduction system according to claim 1, wherein said quality control system includes a video acquiring unit for acquiring the original video stream which is yet to be distributed via the external network, a quality information analyzing unit for receiving and analyzing the first quality information generated by the video receive terminal and the second quality information generated by the home gateway device, and a degraded video reproducing unit for reproducing the degraded video which is played back by the user side by using the original video stream acquired by said video acquiring unit or reproducing the virtual degraded video on a basis of results of the analysis performed by said quality information analyzing unit.

10. The video reproduction system according to claim 9, wherein said degraded video reproducing unit pseudoly carries out a packet loss process on the original video stream by using statistical information about lost packets and a probability distribution of the lost packets which are included in the first or second quality information.

11. The video reproduction system according to claim 9, wherein said degraded video reproducing unit pseudoly carries out a packet transfer delay process on the original video stream by using a packet average transfer delay time included in the first or second quality information.

12. The video reproduction system according to claim 1, wherein said video reproduction system includes a video storage for storing an arbitrary video stream, and a quality information storage for storing the first quality information generated by the video receive terminal and the second quality information generated by the home gateway device, and said quality control system includes a video acquiring unit for acquiring a video stream from said video storage, a packet creating unit for packetizing the video stream acquired by said video acquiring unit into RTP packets, a quality information analyzing unit for acquiring said first quality information and said second quality information from said quality information storage to analyze said first quality information and said second quality information, and a degraded video reproducing unit for reproducing the degraded video which is played back by the user side by using the video stream packetized by said packet creating unit or reproducing the virtual degraded video on a basis of results of the analysis performed by said quality information analyzing unit.

13. The video reproduction system according to claim 1, wherein said home gateway device is a relay device placed in the external network.

14. The video reproduction system according to claim 1, wherein when the video stream is interframe-encoded, each of said first quality information and said second quality information includes statistical information about positions of packets which are collected for each number of consecutive lost packets to each of which information showing a frame type is added.

15. The video reproduction system according to claim 1, wherein when the video stream is interframe-encoded, said quality control information includes statistical information about positions of packets which are collected for each number of consecutive recovered packets which are recovered through an FEC process and to each of which information showing a frame type is added.
